# FASCICULE DE BREVET EUROPEEN

(11) **EP 1 976 909 B1**
(45) Date de publication et mention de la délivrance du brevet: **15.05.2019**
(21) Numéro de dépôt: 06830723.0
(22) Date de dépôt: 19.12.2006
(51) Int. Cl.: C01B 33/143, C08G 77/02, C08G 77/06, C08G 77/04, C08G 77/16

(54) **PROCEDE DE PREPARATION D'UNE RESINE SILICONE**
VERFAHREN ZUR HERSTELLUNG EINES SILIKONHARZES
PROCESS FOR PREPARING A SILICONE RESIN

(30) Priorité: 23.12.2005 FR 0513236
(43) Date de publication de la demande: 08.10.2008
(73) Titulaire: ELKEM SILICONES France SAS, 69003 Lyon (FR); CENTRE NATIONAL DE LA RECHERCHE SCIENTIFIQUE -CNRS-, 75794 Paris Cedex 16 (FR)
(72) Inventeur: RAMDANI, Kamel, F-69420 Tupin Et Semons (FR); BOSSY, Hélène, F-38200 Luzinay (FR); LOMEL, Sébastien, F-38540 Saint Just Chaleyssin (FR); DURAND, Nicolas, F-69001 Lyon (FR)
(86) Numéro de dépôt international: PCT/EP2006/069942
(87) Numéro de publication internationale: WO 2007/071690

(56) Documents cités:
- EP-A- 0 913 187
- EP-A- 1 113 036
- US-A- 3 872 217
- US-A1- 2005 237 854

## Description

### DOMAINE DE L'INVENTION

Le domaine général de l'invention est celui de la synthèse de résines silicones, en particulier celui de la synthèse des résines silicones de type MQ.

### CONTEXTE DE L'INVENTION ET ART ANTERIEUR

Les résines sont des polymères de masse molaire relativement faible possédant une structure tridimensionnelle. Leurs utilisations sont diverses et elles trouvent leurs applications dans les domaines de l'autoadhésif (modificateur de la force de pelage), comme agent anti-mousse, additif de démoulage, additif de peinture et dans bien d'autres domaines encore, touchant un grand nombre de secteurs d'activité. On connaît des résines de siloxane qui sont des produits disponibles dans le commerce et sont utilisées dans la préparation de produits à base de silicone tels que des adhésifs et des produits anti- mousses. De telles résines sont parfois désignées par le terme « résines MQ » du fait de la présence de motifs siloxyles monovalents (M) et de motifs tétravalents (Q).

Elles ont des structures très variées qui dépendent de la quantité de motifs trifonctionnels T ou tétrafonctionnels Q introduits dans le polymère pendant la fabrication. Il est rappelé que dans la terminologie de la chimie des silicones on définit les motifs siloxaniques M, D, T, Q comme suit :

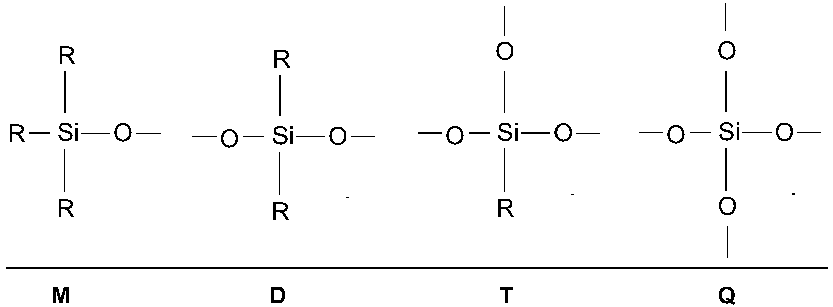

Le squelette des résines MQ résulte de la polycondensation d'un silicate liquide, à l'origine des motifs Q, sur lequel on greffe ultérieurement des chlorosilanes monofonctionnels, à l'origine des motifs M, par hydrolyse des fonctions silanols n'ayant pas polycondensé.

La synthèse des résines silicones MQ passe dans une première étape par la formation de l'acide polysilicique. La réaction d'hydrolyse entre le silicate de sodium et l'acide chlorhydrique est la première étape du procédé de synthèse des résines silicones. Cette étape consiste en l'édification du squelette de la résine par la formation de macromolécules d'acide polysilicique sur lesquelles sont greffées ultérieurement des motifs réactifs ou non réactifs lui conférant certaines propriétés. Les groupements qui peuvent être greffés sur la macromolécule sont variés et interviennent dans les propriétés d'usage de la résine.

Parmi les types de groupements non réactifs on peut citer:
- les groupements méthyles qui sont à l'origine de l'anti-adhérence, de l'hydrophobie et de la dureté de surface, et
- les groupements phényles qui assurent une résistance à la température, la flexibilité à chaud et la compatibilité aux produits organiques.

Parmi les types de groupements réactifs (qui permettent la réticulation en application) on peut citer :
- les groupements hydroxyles, qui permettent une réticulation par condensation à température ambiante en présence d'un catalyseur ou en milieu alcalin,
- les groupements alcoxy qui s'hydrolysent en groupements hydroxyles à température ambiante et en présence d'humidité, et
- les groupements vinyles qui réagissent à température modérée par réaction d'addition en présence de platine.

Ces résines en absence de solvant sont solides et d'aspect blanc et se manipulent en phase solvant soit dans le xylène, le toluène ou le white-spirit soit dans une huile silicone. En solution ou sous forme de poudre, ces composés sont collants contrairement aux huiles silicones qui sont plutôt lubrifiantes.

Les procédés de synthèse des résines silicones connus sont des procédés en batch, c'est-à-dire que l'on effectue, dans un premier temps, une coulée de silicate de sodium dans un réacteur approprié sur « un pied » d'acide chlorhydrique dilué afin de former l'acide polysilicique (APS). Cette étape est généralement menée en réacteur agité fonctionnant en mode semi fermé.

Ensuite, on effectue une étape afin de ralentir la réaction de polymérisation par addition d'un alcool (étape de « quenching »). Puis, la coulée d'un solvant organique est alors effectuée, qui permet d'extraire la résine fonctionnalisée. La fonctionnalisation est réalisée en coulant des chlorosilanes, comportant un nombre variable de chlores et de groupement alkyle, qui réagissent avec les fonctions silanols résiduelles de l'acide polysilicique. La fonctionnalisation, par le choix des chlorosilanes mis en oeuvre, permet de cibler les propriétés d'application de la résine. A nouveau, une nouvelle coulée de solvant a lieu afin de terminer l'extraction de la résine en phase organique. Cet ajout complémentaire de solvant a pour objectif de favoriser la décantation de la phase organique (contenant la résine) de la phase aqueuse. Enfin, on peut éventuellement effectuer une étape d'avancement consistant à réduire le nombre de fonctions silanols résiduelles après l'étape d'hydrolyse est effectuée. Une solution de potasse est coulée, engendrant une consommation des fonctions silanols résiduelles. L'excès de potasse est généralement neutralisé par ajout d'un acide dans le milieu, par exemple l'acide phosphorique, et l'ensemble est filtré.

Des exemples de tels procédés sont décrits, par exemple, dans les brevet US n° 2,676,182 (Daudt et al.) et US n°2,814,601 (Currie et al.).

Cependant, au cours de l'étape de polycondensation, la coulée du silicate de sodium sur le pied d'acide est une étape délicate à mener à l'échelle industrielle. Une faible variation du temps de coulée, de la température, des concentrations en réactifs ont des conséquences sérieuses sur la qualité de l'acide polysilicique formé, squelette de la résine finale. En effet, suivant les conditions de mise en oeuvre de la synthèse, des gels localisés, voire une prise en masse du milieu, sont observés dans le réacteur. Cette étape est déterminante pour la qualité de la résine finale obtenue.

De tels procédés présentent donc une variabilité non négligeable par lot de résines MQ fabriqué et n'offre qu'une faible flexibilité sur les paramètres opératoires tels les débits de coulée des réactifs, la quantité des réactifs. De plus, ils ne confèrent pas de flexibilité quand à la possibilité de préparer des résines MQ de faibles poids moléculaires.

Plus récemment, la demande de brevet EP 1 113 036 décrit un procédé de préparation en continu de résines siliconées comprenant en outre les étapes suivantes :
a) une polymérisation en continu du silicate de sodium, en milieux aqueux, en présence d'un acide pour former un sol de silice suivie rapidement d'une étape de bloquage (« quenching ») en continu par addition d'un alcool ; et
b) une fonctionnalisation (« capping ») en continu par addition d'un organosilane dans un mélange réactionnel eau/solvant organique.

Cette référence décrit aussi une configuration « semi continue » où la réaction de polycondensation est réalisée en continu dans un réacteur tubulaire avec injection en ligne de silicate de sodium ou dans un réacteur boucle, puis les étapes en aval sont effectuées en réacteur fermé. Il est indiqué que le poids moléculaire du sol de silice dépend de la température réactionnelle ainsi que du temps de séjour des réactifs : silicate de sodium/acide. Ainsi la synthèse de résine de faible viscosité est atteinte en assurant un faible temps de séjour (inférieur à une minute) des réactifs silicate de sodium/acide. Sinon, pour la synthèse de résines de plus haut poids moléculaires, le temps de séjour préconisé pour la préparation de l'acide polysilicique est compris entre 1 et 5 minutes. Les exemples de réacteurs décrits et permettant d'atteindre cette contrainte liée au temps de séjour des réactifs nécessaires à la synthèse de l'acide polysilicique sont:
- une colonne agitée de plusieurs étages (type « Scheibel », configuration préférée, chaque étage correspondant à une étape du procédé),
- un réacteur tubulaire comprenant des mélangeurs statiques (« plug flow static mixer reactor »), et
- une boucle où circule l'acide chlorhydrique avec injection de silicate de sodium (« packed plug flow reactor »).

Il est à noter que lorsque des résines de basses viscosités sont souhaitées, le procédé décrit nécessite une addition rapide du ralentisseur (alcool) de la réaction de polymérisation, ceci afin d'éviter une polycondensation trop élevée de l'acide polysilicique et donc une montée rapide de la viscosité. Un autre levier pour contrôler la viscosité de la résine MQ obtenue est de jouer sur le temps de l'étape de fonctionnalisation (voir par exemple les exemples 2 et 4).

Bien que le procédé brièvement décrit ci-dessus apporte une solution technique satisfaisante aux difficultés exposées plus haut, il est toutefois souhaitable de proposer des améliorations notamment au niveau du contrôle des conditions opératoires de l'étape de polycondensation conduisant à la formation de l'acide polysilicique. En effet, le procédé décrit ci-dessus et ceux de l'art antérieur ne permettent pas une grande flexibilité au niveau industriel car au cours de l'étape de polycondensation conduisant à la formation de l'acide polysilicique, le débit et la concentration doivent être soigneusement contrôler de manière à maintenir le ratio molaire [SiO₂ du silicate de sodium : acide] dans une plage de valeur restreinte ceci afin d'éviter une prise en gel du milieu réactionnel.

Il est aussi connu que toute variation même mineure du pH peut modifier les conditions d'équilibre de la réaction de polycondensation. De plus, le silicate de sodium est extrêmement sensible aux phénomènes de concentration et, par conséquent, toute variation même mineure des débits des réactifs peut modifier la dilution du silicate dans le milieu.

### OBJECTIF DE L'INVENTION

Dans ces circonstances, l'un des objectifs essentiels de la présente invention est de proposer un nouveau procédé de préparation de résines silicones, en particulier celui de la synthèse des résines silicones de type MQ, permettant un meilleur contrôle des conditions opératoires de l'étape de la polymérisation d'un silicate de sodium **(B)** en milieu aqueux et en présence d'un acide **(C)** pour former un hydrosol de silice (acide polysilicique).

Le nouveau procédé selon l'invention présente l'avantage de donner une plus grande flexibilité au niveau des débits et des concentrations des réactifs lors de l'étape de la polymérisation du silicate de sodium **(B)** sans avoir à souffrir des inconvénients liés à la sensibilité au pH et à la concentration des réactifs dans le milieu réactionnel.

Le procédé selon l'invention, présente aussi l'avantage de pouvoir préparer des résines de basses, moyennes et hautes viscosités dans une large gamme de concentrations de réactifs lors de l'étape de la polymérisation du silicate de sodium **(B)** tout en maîtrisant la réaction. Cette souplesse au niveau du procédé est un avantage important lors d'une mise en oeuvre industrielle.

D'autres objectifs et avantages de la présente invention apparaîtront à la lecture de la description qui va suivre.

### BREVE DESCRIPTION DE L'INVENTION

Pour atteindre cet objectif, les inventeurs ont eu le mérite de mettre en évidence que le système réactionnel est composé de processus rapides, dont le déroulement est fortement perturbé par des gradients de concentration et de pH engendrés par des conditions de mélange standard.

Les inventeurs ont eu aussi le mérite de mettre en évidence, de manière tout à fait surprenante et inattendue, que lors de la polymérisation, en particulier en continu, d'un silicate de sodium **(B)** en milieu aqueux et en présence d'un acide **(C)** pour former un hydrosol de silice (acide polysilicique), un contrôle adéquate de la vitesse et de la qualité du mélange des réactifs de cette étape de polycondensation permet de s'affranchir des contraintes décrites ci-dessus. Grâce au procédé selon l'invention, il est à présent possible de travailler avec une plus grande plage en concentration des réactifs (silicate de sodium **(B)** et acide **(C)**) au cours de l'étape de polycondensation. L'étape de polycondensation selon l'invention est aussi moins sensible au pH du mélange réactionnel conférant une grande souplesse au procédé, alors qu'avec un procédé selon l'art antérieur utilisant des outils de mélange non intensif ce critère est limitant.

Ceci est en tout point remarquable, car l'art antérieur est muet quand à l'utilisation d'outil de mélange intensif dissipant une puissance volumique ε supérieure à 10 kW/m³ lors de l'étape de polycondensation en continu du silicate de sodium lors de la préparation de résines silicones, en particulier celles du type MQ.

Actuellement, l'une des techniques les plus couramment utilisées pour mélanger deux ou plusieurs liquides consiste à utiliser un réacteur muni d'un agitateur mécanique de type hélice, turbine ou autre et à injecter les réactifs dans le réacteur. Cependant, l'énergie dissipée par l'agitation mécanique ne permet pas d'atteindre des temps de micromélange suffisamment faibles pour mettre en oeuvre des réactions rapides et complexes et est inadaptée au cas de la polymérisation, en particulier en continu, d'un silicate de sodium **(B)** où la viscosité augmente rapidement au cours du temps.

Il est à remarquer que les mélangeurs mis en oeuvre dans la demande de brevet EP 1 113 036 pour mélanger les réactifs nécessaires à l'étape de polymérisation en continu du silicate de sodium ne permettent pas d'obtenir des temps de mélange inférieur à une seconde.

Ces objectifs, parmi d'autres, sont atteints par la présente invention qui concerne, en premier lieu, un procédé de préparation d'une résine silicone **(A)** comprenant :
- une étape a) qui consiste en la polymérisation, de préférence en continu, d'un silicate de sodium **(B)** en milieu aqueux et en présence d'un acide **(C)** pour former un hydrosol de silice (acide polysilicique),
ledit procédé étant caractérisé en ce que :
- au moins un fluide **(1)** comprenant le silicate de sodium **(B)** en phase aqueuse et au moins un fluide **(2)** comprenant l'acide **(C)** sont mélangés en continu dynamiquement, les flux se rencontrant en un point unique pour former un mélange **(3)** au moyen d'au moins un outil de mélange intensif **(M)** dissipant une puissance volumique ε supérieure à 10 kW/m³, de préférence supérieure à 20 kW/m³ et encore plus préférentiellement 20 kW/m³ < ε <10⁶ kW/m³,
- on récupère à la sortie de l'outil de mélange intensif le mélange **(3),** et
- on continue la réaction de polymérisation avec le mélange **(3)** au sein d'un réacteur **(R1)** pour former l'hydrosol de silice (acide polysilicique), et
- une étape b) consistant à ralentir (étape de "quenching") la réaction de polymérisation par addition, de préférence en continu, d'un alcool (D).

### DESCRIPTION DETAILLEE DE L'INVENTION

Sans vouloir limiter l'invention à une théorie scientifique, on expliquerait la formation de l'acide polysilicique par les deux réactions (1) et (2) suivantes, qui sous une forme simplifiée, peuvent se résumer ainsi :

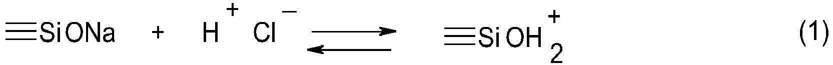

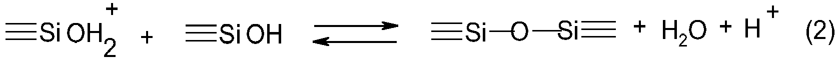

La réaction (1) (formation de l'ion oxonium) est une réaction rapide (bien inférieure à une seconde) alors que la réaction (2) (réaction de polycondensation) est plus lente. Cependant, d'autres réactions complexes parallèles-concurentes et/ou consécutives-concurentes liées la sensibilité au pH, à la concentration des réactifs du milieu réactionnel et à des phénomènes de dépolycondensation influent sur le bilan global de la réaction.

Il a donc été trouvé de manière surprenante que le mélange des réactifs en un temps plus court que le temps caractéristique de certaines réactions participant à la préparation de l'acide polysilicique permet de s'affranchir des contraintes décrites ci-dessus.

C'est ainsi qu'il a été découvert par la Demanderesse que lors de la polymérisation en continu d'un silicate de sodium il est important d'obtenir un mélange avec un outil de mélange intensif des deux fluides réactifs (comprenant séparément le silicate de sodium et l'acide) en un temps plus court que le temps caractéristique de certaines réactions participant à la préparation de l'acide polysilicique.

De manière préférentielle, l'outil intensif **(M)** sera choisi de manière à obtenir un temps de séjour de mélange **t1** des fluides **(1)** et **(2)** dans l'outil de mélange intensif **(M)** inférieur ou égal à 0,1 s et de préférence 0,0001s ≤**t1** ≤ 0,1s.

L'outil de mélange intensif **(M)** se différencie principalement des outils de mélange classiques (cuve agitée, mélangeurs statiques type Kenics, Sulzer, réacteur boucle ...) par la miniaturisation de ces dimensions (canaux d'injection, chambre de mélange) et sa structuration interne. Ces deux caractéristiques conduisent à dissiper une puissance volumique importante lorsque l'on effectue le mélange de deux fluides. Comme exemple d'outil de mélange intensif **(M)** on peut citer les mélangeurs à jets tangentiels, les mélangeurs par impact de jets libres (c'est-à-dire sans contact des jets avec les parois du mélangeur) et des mélangeurs de type rotor-stator. Cette liste n'est pas limitative et par conséquent tout type d'outil de mélange intensif adaptés au mélange d'au moins deux fluides réactifs susceptible de dissiper une puissance volumique ε supérieure à 10 kW/m³ conviendra au sens de l'invention.

Par exemple, un outil de mélange intensif **(M)** peut-être un mélangeur à jets tangentiels. Dans ce cas, selon un mode préféré de l'invention , le débit de chaque réactif est divisé en deux courants qui sont introduits dans le mélangeur de façon diamétralement opposées, mais légèrement décalées. Les canaux d'injection des réactifs ont un faible diamètre (entre 0,5 et 5 mm) sur une longueur de quelques millimètres pour les entrées, le canal de sortie a un diamètre compris entre 3 et 10 mm).

A titre de comparaison, dans un mélangeur statique associé à une colonne de type Scheibel tel que décrit dans la demande de brevet EP 1 113 036, la puissance dissipée ne peut excéder 5 KW/m³ et par conséquent ce type de mélangeur n'est pas adapté comme outil de mélange intensif selon l'invention.

Le silicate de sodium **(B)** est généralement introduit dans l'outil de mélange intensif **(M)** sous forme d'une solution aqueuse dont la teneur en poids de SiO₂ varie entre 5% et 70 % et de préférence entre 5% et 20%.

Le silicate de sodium **(B)** présente généralement un ratio molaire SiO₂ :Na₂O d'au moins 2, de préférence d'au moins 2,5 et encore plus préférentiellement d'au moins 3,0.

L'acide **(C)** permet d'induire la polymérisation du silicate de sodium **(B)** afin de former l'acide polysilicique.

Selon un mode de réalisation particulier, l'acide **(C)** est ajouté de manière à ce que le pH du mélange **(3)** est de préférence à 2.

Comme exemple d'acide **(C)** on peut citer :
- les acides inorganiques tels que : l'acide chlorhydrique, l'acide nitrique, l'acide hydrobromique, l'iodure d'hydrogène, l'acide sulfurique, l'acide phosphorique, l'acide sulfonique, l'acide carbonique et leurs mélanges, et
- les acides organiques tels que : l'acide acétique, l'acide propionique, l'acide formique, l'acide benzoïque, l'acide salicylique, l'acide sébacique, l'acide adipique, les acides dicarboxyliques, l'acide oléique, l'acide palmitique, l'acide stéarique et leurs mélanges.

Selon un mode de réalisation préféré, l'acide **(C)** est choisi parmi le groupe constitué par : l'acide chlorhydrique, l'acide nitrique, l'acide hydrobromique, l'iodure d'hydrogène, l'acide sulfurique, l'acide phosphorique, l'acide sulfonique et leurs mélanges. De préférence, l'acide **(C)** est l'acide chlorhydrique (HCl).

L'acide **(C)** est généralement introduit dans l'outil de mélange intensif **(M)** sous forme d'une solution aqueuse dont la concentration en poids d'acide varie entre 5 et 99%, de préférence entre 5 et 35% et encore plus préférentiellement entre 10 et 25%.

Selon un mode de réalisation avantageux de l'invention, le rapport molaire :
[SiO2 du silicate de sodium **(B)**] : [HCl] est compris entre 0,2 et 2,0 de préférence compris entre 0,6 et 1,4.

Selon un autre mode de réalisation particulier, les conditions de mélange des fluides **(1)** et **(2)** comprenant respectivement le silicate de sodium **(B)** et l'acide **(C)** en phases aqueuses sont choisis de manière à obtenir un mélange **(3)** comprenant :
- de 50 à 95 % en poids et de préférence de 75 à 95 % en poids d'eau,
- de 1 à 25% en poids et de préférence de 1 à 15% en poids de silicate de sodium **(B),** et
- de 0,5 à 10% en poids et de préférence de 2 à 10% en poids d'acide **(C).**

Un autre avantage de l'invention est que lorsque l'on continue la réaction de polymérisation avec le mélange **(3)** au sein d'un réacteur **(R1)** pour former l'hydrosol de silice (acide polysilicique), le procédé selon l'invention donne une plus grande latitude pour démarrer l'étape de « quenching » afin de ralentir la réaction de polymérisation par addition d'un alcool **(D).**

Selon un mode préférentiel de l'invention, le temps de séjour **t2** de la réaction de polymérisation du mélange **(3)** est inférieur ou égal à 120 mn, de préférence **t2** ≤60 mn et encore plus préférentiellement 1 s ≤ **t2** ≤10 mn.

Des exemples d'alcools **(D)** utiles selon l'invention sont, par exemple, des composés organiques solubles dans l'eau et polaires tels que les alcools organiques comme le méthanol, l'éthanol, l'isobutanol, l'isopropanol (IPA), le n-butanol, le n-propanol, des glycols tels que l'éthylène glycol et le propylène glycol et leurs mélanges. De préférence, l'alcool **(D)** est un alcool en C₁-C₁₂ et encore plus préférentiellement l'alcool est choisi parmi le groupe constitué par : l'isopropanol, le méthanol, l'éthanol et leurs mélanges.

En général, l'alcool **(D)** est ajouté au milieu réactionnel pur ou en solution aqueuse, de préférence dans des teneurs compris entre 50 et 99 % en poids d'alcool.

Selon un mode de réalisation particulier, la polymérisation [étape a)], et l'étape de quenching [étape b)], sont effectuées à une température comprise entre 0°C et 75°C, de préférence entre 15°C et 40°C et encore plus préférentiellement entre 15°C et 25°C.

Selon un autre mode de réalisation de l'invention, on effectue après l'étape b) une étape supplémentaire c) de fonctionnalisation (« capping ») consistant en l'addition, de préférence en continu, d'un composé organosilicé **(E)** et d'au moins un liquide **(F)** choisi parmi le groupe constitué par : les solvants organiques, les fluides siloxaniques et leurs mélanges.

Des exemples de composés organosilicés **(E)** sont par exemples : des composés de silicés de formules :

R₍₄₋ₙ₎SiZₙ

avec:
- n est 1, 2 ou 3,
- le groupe Z, identiques ou différents, représentent chacun un halogène, de préférence le chlore, un hydroxyle, un alcoxy, de préférence en C₁-C₈, ou un groupe -OSiR¹₃, et
- les radicaux R et R¹, identiques ou différents, représentent chacun un atome hydrogène ou un radical monovalent hydrocarboné saturé ou non en C₁ à C₂₀, substitué ou non substitué, aliphatique, cyclanique ou aromatique.

Comme exemples de composés organosilicés **(E)** on peut citer le composés suivants : triméthylchlorosilane, phényldiméthylchlorosilane, triméthyléthoxysilane, triméthylisopropoxysilane, tolylméthyldichlorosilane, hexaméthyldisiloxane, diméthylchlorosiloxane, phényltrichlorosilane, hexaméthyldisiloxane, téaryltrichlorosilane, monotolylsiloxane, triéthylchlorosilane, éthyldiméthylchlrorosilane, tétraméthyldisiloxane, trifluorotolylméthyldichlorosilane, chlorophényldiméthylchlorosilane, méthyldivinylchlorosilane et leurs mélanges.

La quantité de composés organosilicés **(E)** varie en fonction de la nature du composé choisi. En général, on peut utiliser une quantité comprise entre 0,1 mole et 3,0 moles, de préférence entre 0,5 mole et 1,5 mole de composé organosilicé **(E)** par mole de motifs SiO₂ contenu dans l'hydrosol de silice (acide polysilicique).

Comme exemples de liquide **(F)** dans lequel la résine MQ est soluble et dans lequel l'alcool **(D)** est relativement insoluble, on peut citer, par exemple, l'hexaméthyldisiloxane, le toluène, le xylène, les hydrocarbonés linéaires ou ramifiés tels que l'heptane, l'octane et l'isodécane et leurs mélanges.

La quantité de liquide **(F)** utile selon l'invention est, par exemple, comprise entre 5 et 75% en poids et de préférence compris entre 20 et 40 % en poids.

Selon un mode de réalisation particulier, l'étape de fonctionnalisation c) est effectuée à une température comprise entre 25°C et 100°C, de préférence entre 40°C et 85°C et encore plus préférentiellement entre 75°C et 85°C.

Selon un autre mode de réalisation, le temps de séjour pour l'étape de fonctionnalisation est supérieur ou égal à 5 minutes. Au cours de cette étape, le pH est de préférence inférieur à 7, de préférence compris entre 1 et 6 et encore plus préférentiellement compris entre 0 et 4.

Selon un mode de réalisation particulièrement avantageux de l'invention, on effectue après l'étape b') ou c) une étape supplémentaire d) qui consiste à séparer le milieu réactionnel en deux phases : une phase aqueuse et une phase organique comprenant la résine silicone **(A)** et ledit liquide **(F).**

Selon un autre mode de réalisation de l'invention, on effectue après l'étape d) une étape supplémentaire e) qui consiste à isoler ladite phase organique, et à éliminer ledit liquide **(F)** (étape de « stripping ») afin d'isoler ladite résine **(A).** La technique du stripping est bien connue de l'homme de l'art et ne nécessite donc pas une description détaillée.

La phase organique peut être isoler par toute méthode connue de l'homme de l'art, par exemple par la technique de décantation qui peut-être effectuée en batch ou en continu. Ensuite la résine **(A)** peut-être est filtrée par toute méthode connue de l'homme de l'art.

Selon une variante particulièrement avantageuse, on effectue après l'étape d) une étape supplémentaire e') dans laquelle on réduit le taux des groupements silanols résiduels de la résine silicone **(A)** tout en éliminant ledit liquide **(F)** afin d'isoler ladite résine **(A).**

De préférence, on réduit le taux des groupements silanols résiduels de la résine silicone **(A)** par condensation des groupements silanols résiduels en présence d'un catalyseur alcalin ou en faisant réagir les groupements silanols résiduels en présence de silazane(s) ou de dérivé(s) silanes halogéné(s).

Comme exemples de catalyseurs alcalins on peut citer, par exemple, NaOH, LiOH et KOH. Le catalyseur alcalin préféré est KOH.

Comme exemples de silazanes on peut citer, par exemple, l'hexaméthyldisilazane ou des dérivés silanes halogénés tels que le triméthylchlorosilane.

D'autres détails ou avantages de l'invention apparaîtront plus clairement au vu des exemples donnés ci-dessous uniquement à titre indicatif.

### PARTIE EXPERIMENTALE

### Exemple 1 : Invention - Préparation d'une résine silicone MQ^{OH} avec une étape de polycondensation effectuée avec un outil de mélange intensif à jet tangentiel:

1-1) Une résine MQ^{OH} présentant un ratio M/Q de 0,8 est préparée dans un procédé continu selon la description suivante :
   On effectue la réaction, à 20°C, entre un silicate de sodium à 50% en poids dans de l'eau (solution A), (teneur en SiO₂ du silicate de 30% en poids et ratio molaire Si0₂/Na₂0 de 3,3), et une solution aqueuse d'acide chlorhydrique à 18% en poids d'HCl (solution B) avec un ratio molaire SiO2 :HCl = 0,85 . La réaction est réalisée dans un outils de mélange intensif à jet tangentiel **(M)** présentant une puissance dissipée de 100 kW/m³ et un temps de mélange **t1** de 5 ms (0,005 s), avec des débits respectifs de solution A et de B de 40 kg/h et 20 kg/h. Le débit de chaque réactif est divisé en deux courants qui sont introduits dans le mélangeur de façon diamétralement opposée, mais légèrement décalées. Les canaux d'injection des réactifs ont un diamètre d'environ 1mm sur une longueur de quelques millimètres pour les entrées, le canal de sortie a un diamètre d'environ 4 mm. La température des réactifs est de 20°C. Le produit de la réaction, l'acide polysilicique, est caractérisé en répartition massique moyenne par analyse chromatographique.
1-2) Une partie du flux d'acide polysilicique est directement envoyé dans un réacteur piston **(R1)** maintenu à 20°C. Le débit d'acide polysilicique considéré est de 4,5 kg/h. Le temps de séjour **t2** de l'étape de polycondensation dans le réacteur **(R1)** est de 3 min. Un échantillon est prélevé pour analyse chromatographique.
1-3) L'acide polysilicique est envoyé vers un réacteur parfaitement agité continu, où est introduit un mélange d'isopropanol et de chlorosilanes [(CH₃)₃SiCl], les débits respectifs sont de 1 kg/h et 0,6 kg/h. Le xylène est également introduit dans ce réacteur à un débit de 0,9 kg/h. Le réacteur est maintenu à 75°C. Le temps de séjour dans le réacteur est de 20 minutes.
   Le mélange réactionnel est envoyé vers un décanteur continu. La température dans le décanteur est maintenue à 75°C, et le temps de séjour est de 20 minutes. La phase organique est ensuite dévolatilisée en mode continu pour obtenir la résine finale à 60% d'extrait sec dans le xylène, et enlever les volatils résiduels. La résine finale présente une viscosité de 12 centiPoises à 60% d'extrait sec et une teneur en silanol de 2,4 % en poids.

Dans l'étape 1-1) on remarque que la réaction entre le silicate et l'acide est effectué à 20°C, c'est-à-dire que le procédé selon l'invention ne nécessite pas de maintenir le réacteur à des températures inférieures à 10°C, ce qui est un avantage pour une mise en oeuvre industrielle.

Dans l'étape 1-3) on remarque que le procédé selon l'invention permet une variante qui consiste à ajouter l'isopropanol en même temps que le chlorosilane. Cette variante, jusqu'alors inconnue selon l'art antérieur, permet une plus grande flexibilité pour une mise en oeuvre industrielle.

### Exemple 2 : Invention - Préparation d'une résine silicone MQ^{OH} avec une étape de

### polycondensation effectuée avec un outil de mélange intensif à jet tangentiel:

2-1) On répète le mode opératoire décrit dans le paragraphe 1-1) de l'Exemple 1, puis
2-2) le milieu réactionnel est envoyé dans un réacteur parfaitement agité de type batch **(R'1)** maintenu à 20°C. Le temps de séjour **t2** de l'étape de polycondensation dans le réacteur **(R'1)** est de 3 min.
2-3) On introduit ensuite l'isopropanol (débit de 1 kg/h) puis le chlorosilanes [(CH₃)₃SiCl] avec un débit de 0,6 kg/h. Le xylène est ensuite introduit dans ce réacteur à un débit de 0,9 kg/h. La température du réacteur est montée à 75°C en une heure, puis maintenue à cette température pendant une heure. L'agitation est arrêtée afin de réaliser la décantation de la phase organique contant la résine.

La phase organique est ensuite dévolatilisée pour obtenir la résine finale à 60% d'extrait sec dans le xylène. La résine finale MQ^{OH} présente une viscosité de 10 cPoises à 60% d'extrait sec et une teneur en silanol de 2,7 % en poids.

### Exemple 3 : Evolution des masses molaires moyennes en poids en fonction de la concentration des réactifs pour l'étape de polycondensation

3-1) Une série d'essai est menée dans les mêmes conditions que l'exemple 1 mais en faisant varier les concentrations des réactifs de l'étape 1-1) (mélange avec un outil intensif). L'acide polysilicique obtenu en sortie de l'outil de mélange intensif **(M)** et du réacteur piston **(R1)** est caractérisé par la technique de chromatographie liquide d'exclusion stérique (voir Tableau 1 des résultats). Les masses moyennes du polymère ne varient pas (ou très peu), environ 9000 g/l en équivalent polystyrène. A la sortie du réacteur piston R2, les masses molaires moyennes sont de 1100 g/mol. A l'étape de fonctionnalisation, le ratio [(CH₃)₃SiCl] : [SiO₂ du silicate] est maintenu constant est égal à 1,8. Les résines finales obtenues sont identiques en viscosité et % de silanol. Les quantités de xylène sont ajustées de manière à obtenir un produit final à 60% en poids de résine.
3-2) A titre d'essai comparatif 1 on coule le silicate sur un pied de HCl dans un réacteur parfaitement agité de type batch **(R'1),** puissance dissipée de 4 kW/m³, maintenu à 20°C. Un échantillon est prélevé pour analyse dès la fin de la coulée (3minutes).
3-3) A titre d'essai comparatif 2, on répète une série d'essai est mené dans les mêmes conditions que l'exemple 3-1) mais en utilisant un outil de mélange non intensif (réacteur boucle, décrit dans la demande de brevet EP 1 113 036).

**Tableau 1**

| | | Invention Exemple 3-1) | | Comparatif 1 Exemple 3-2) | Comparatif 2 Exemple 3-3) |
|---|---|---|---|---|---|
| [SiO₂] mol/L avant mélange | [HCl] mol/L avant mélange | Mw de l'APS après ménlangeur (M) | Mw de l'APS après passage dans le réacteur (R1) | Mw de l'APS En fin de coulée du silicate | Mw de l'APS après mélangeur |
| 2.39 | 3.96 | 8700 | 10000 | 12000 | 10800 |
| 2.39 | 5.75 | 9000 | 11000 | 13000 | 12000 |
| 2.39 | 6.37 | 8900 | 12000 | 18000 | 18000 |
| 2.39 | 8.60 | 9000 | 15000 | 26000 | - |

La masse molaire moyenne en poids (Mw) de l'acide polysilicique (APS) est exprimée en masse relative par rapport au polystyrène.

On remarque que le procédé selon l'invention permet d'obtenir à la sortie de l'outil de mélange intensif un acide polysilicique avec une masse molaire moyenne en poids constante même en faisant varier fortement la concentration en HCl. Ceci n'est pas observé pour l'essai comparatif où l'on observe des variations de l'ordre de 116% pour les bornes extrêmes de l'intervalle étudié.

De plus, même avec des temps de séjour équivalents (3 minutes), l'outil de mélange intensif permet d'obtenir un acide polysilicique de plus faible masse molaire moyenne en poids que dans l'exemple comparatif (différence de 73%).

**Tableau 2.**

| | | Invention Exemple 3-1) | | Comparatif Exemple 3-2) |
|---|---|---|---|---|
| [SiO₂] mol/L avant mélange | [HCl] mol/L avant mélange | Mw de l'APS après ménlangeur (M) | Mw de l'APS après passage dans le réacteur (R1) | Mw de l'APS En fin de coulée du silicate |
| 2,40 | 5,75 | 9000 | 11000 | 12500 |
| 2,80 | 5,75 | 9000 | 11000 | 14000 |
| 3,20 | 5,75 | 9100 | 11500 | 18000 |
| 3,60 | 5,75 | 9100 | 12000 | 27000 |

Les mêmes remarques s'appliquent lorsque l'on fait varier la concentration en SiO₂ du silicate de sodium.

### Exemple 4

On fait réagir le silicate de sodium à 50% en poids dans de l'eau (solution A), silicate caractérisé par une teneur en SiO₂ du silicate de 26% en poids et un ratio molaire Si0₂/Na₂0 de 3,4, et une solution aqueuse d'acide chlorhydrique à 16,5% en poids d'HCl (solution B) avec un ratio molaire SiO₂: HCl = 1. La réaction est réalisée dans un outil de mélange intensif à jet tangentiel **(M)** (invention, présentant un temps de mélange **t1** de 5 ms et une puissance dissipée de 100 kW/m³) ou avec un outil de mélange non intensif (réacteur boucle, technologie similaire au réacteur décrit dans l'exemple 4 de la demande de brevet EP 1 113 036, puissance dissipée < 5 kW/m³, de l'ordre de 2 kW/m³, essai comparatif) avec des débits respectifs des solutions A et B que l'on fait varier. La température des réactifs est de 20°C.

**Tableau 3**

| Débits des réactifs | | Invention | Comparatif |
|---|---|---|---|
| Débit de silicate de sodium (kg/h) | Débit de HCI (kg/h) | Mw de l'APS après mélangeur (M) | Mw de l'APS à la sortie du réacteur boucle |
| 40 | 40 | 8300 | 13800 |
| 40 | 20 | 8200 | 10800 |

On remarque que le procédé selon l'invention permet d'obtenir à la sortie de l'outil de mélange intensif un acide polysilicique avec une masse molaire moyenne en poids constante même en faisant les débits en HCl. Ceci n'est pas observé pour l'essai comparatif où l'on observe des variations de l'ordre de 30 % pour les bornes extrêmes de l'intervalle étudié. A la sortie de l'outil de mélange intensif, suivant les conditions opératoire, les masses molaires moyennes en poids obtenues sont plus faibles (65% et 32 %) ce qui permet la synthèse de résine de plus faible viscosité que selon un outil de mélange non intensif.

### Exemple 5 Préparation d'une résine silicone MQ^{OH} de faible viscosité avec une étape de polycondensation effectuée avec un outil de mélange intensif à jet tangentiel

5-1) Une résine MQ^{OH} présentant un ratio M/Q de 0,8 est préparée dans un procédé continu selon la description suivante :
   On effectue la réaction, à 20°C, entre un silicate de sodium à 50% en poids dans de l'eau (solution A), (teneur en SiO₂ du silicate de 30% en poids et ratio molaire Si0₂/Na₂0 de 3,3), et une solution aqueuse d'acide chlorhydrique à 18% en poids d'HCl (solution B) avec un ratio molaire SiO2 :HCl = 0,85 . La réaction est réalisée dans un outils de mélange intensif à jet tangentiel **(M)** présentant une puissance dissipée de 100 kW/m³ et un temps de mélange **t1** de 5 ms (0,005 s), avec des débits respectifs de solution A et de B de 40 kg/h et 20 kg/h. Le débit de chaque réactif est divisé en deux courants qui sont introduits dans le mélangeur de façon diamétralement opposée, mais légèrement décalées. Les canaux d'injection des réactifs ont un diamètre d'environ 1mm sur une longueur de quelques millimètres pour les entrées, le canal de sortie a un diamètre d'environ 4 mm. La température des réactifs est de 20°C. Le produit de la réaction, l'acide polysilicique, est caractérisé en répartition massique moyenne par analyse chromatographique.
5-2) Une partie du flux d'acide polysilicique est envoyée vers un réacteur parfaitement agité et en continu, puis est introduit un mélange d'isopropanol et de chlorosilanes [(CH₃)₃SiCl], les débits respectifs sont de 1 kg/h et 0,6 kg/h. Le xylène est également introduit dans ce réacteur à un débit de 0,9 kg/h. Le réacteur est maintenu à 75°C. Le temps de séjour dans le réacteur est de 30 minutes. Le mélange réactionnel est ensuite envoyé vers un décanteur fonctionnant en mode continu. La température dans le décanteur est maintenue à 75°C, et le temps de séjour est de 20 minutes. La phase organique est ensuite dévolatilisée en mode continu pour obtenir la résine finale à 60% d'extrait sec dans le xylène, et enlever les volatils résiduels. La résine finale présente une viscosité de 5,8 centiPoises à 60% d'extrait sec et une teneur en silanol de 2,4 % en poids.

### Exemple 6 : Préparation d'une résine silicone M^{Vi}Q (Vi= vinyle) avec une étape de polycondensation effectuée avec un outil de mélange intensif à jet tangentiel

6-1) Une résine M^{Vi}Q est préparée dans un procédé continu selon la description suivante :
   On effectue la réaction, à 20°C, entre un silicate de sodium à 50% en poids dans de l'eau (solution A), (teneur en SiO₂ du silicate de 30% en poids et ratio molaire Si0₂/Na₂0 de 3,3), et une solution aqueuse d'acide chlorhydrique à 18% en poids d'HCl (solution B) avec un ratio molaire SiO2 :HCl = 0,85 . La réaction est réalisée dans un outils de mélange intensif à jet tangentiel **(M)** présentant une puissance dissipée de 100 kW/m³ et un temps de mélange **t1** de 5 ms (0,005 s), avec des débits respectifs de solution A et de B de 40 kg/h et 20 kg/h. Le débit de chaque réactif est divisé en deux courants qui sont introduits dans le mélangeur de façon diamétralement opposée, mais légèrement décalées. Les canaux d'injection des réactifs ont un diamètre d'environ 1mm sur une longueur de quelques millimètres pour les entrées, le canal de sortie a un diamètre d'environ 4 mm. La température des réactifs est de 20°C. Le produit de la réaction, l'acide polysilicique, est caractérisé en répartition massique moyenne par analyse chromatographique.
6-2) Une partie du flux d'acide polysilicique est envoyée vers un réacteur parfaitement agité et en continu, puis est introduit un mélange d'isopropanol et de chlorosilanes [(CH₃)₃SiCl et (CH₃)(Vi)SiCl₂, avec Vi= vinyle], les débits respectifs sont de 1 kg/h et 1,2 kg/h. Le xylène est également introduit dans ce réacteur à un débit de 0,9 kg/h. Le réacteur est maintenu à 75°C. Le temps de séjour dans le réacteur est de 30 minutes. Le mélange réactionnel est ensuite envoyé vers un décanteur fonctionnant en mode continu. La température dans le décanteur est maintenue à 75°C, et le temps de séjour est de 20 minutes. La phase organique est ensuite dévolatilisée en mode continu puis suivi par un avancement à potasse afin de diminuer le taux de silanol. La résine finale présente une viscosité de 9,5 centiPoises à 60% d'extrait sec, avec un taux de silanol de 0,2 % en poids et un taux de vinyle de 3% en poids.

## Revendications

1. Procédé de préparation d'une résine silicone **(A)** comprenant :
- une étape a) qui consiste en la polymérisation, de préférence en continu, d'un silicate de sodium **(B)** en milieu aqueux et en présence d'un acide **(C)** pour former un hydrosol de silice (acide polysilicique),
ledit procédé étant **caractérisé en ce que** :
- au moins un fluide **(1)** comprenant le silicate de sodium **(B)** en phase aqueuse et au moins un fluide **(2)** comprenant l'acide **(C)** sont mélangés en continu dynamiquement, les flux se rencontrant en un point unique pour former un mélange **(3)** au moyen d'au moins un outil de mélange intensif **(M)** dissipant une puissance volumique ε supérieure à 10 kW/m³, de préférence supérieure à 20 kW/m³ et encore plus préférentiellement 20 kW/m³ < ε <10⁶ kW/m³,
- on récupère à la sortie de l'outil de mélange intensif le mélange **(3),** et
- on continue la réaction de polymérisation avec le mélange **(3)** au sein d'un réacteur **(R1)** pour former l'hydrosol de silice (acide polysilicique), et
- une étape b) consistant à ralentir (étape de « quenching ») la réaction de polymérisation par addition, de préférence en continu, d'un alcool **(D).**

2. Procédé de préparation d'une résine silicone **(A)** selon la revendication 1 **caractérisé en ce qu'**il est mis en oeuvre avec un temps de séjour de mélange **t1** des fluides **(1)** et **(2)** dans l'outil de mélange intensif **(M)** inférieur ou égal à 0,1 s et de préférence 0,0001s ≤ **t1** ≤ 0,1s.

3. Procédé de préparation d'une résine silicone **(A)** selon la revendication 1 **caractérisé en ce que** le temps de séjour **t2** de la réaction de polymérisation du mélange **(3)** est inférieur ou égal à 120 mn, de préférence **t2** ≤60 mn et encore plus préférentiellement 1 s ≤ **t2** ≤10 mn.

4. Procédé de préparation d'une résine silicone **(A)** selon la revendication 1 **caractérisé en ce que** l'on effectue après l'étape b) une étape supplémentaire c) de fonctionnalisation (« capping ») consistant en l'addition, de préférence en continu, d'un composé organosilicé **(E)** et d'au moins un liquide **(F)** choisi parmi le groupe constitué par : les solvants organiques, les fluides siloxaniques et leurs mélanges.

5. Procédé de préparation d'une résine silicone **(A)** selon la revendication 4 **caractérisé en ce que** le liquide **(F)** est choisi parmi le groupe constitué par : l'hexaméthyldisiloxane, le toluène, le xylène, un composé hydrocarboné linéaire et un composé hydrocarboné ramifié.

6. Procédé de préparation d'une résine silicone **(A)** selon l'une quelconque des revendications 4 ou 5 **caractérisé en ce que** l'on effectue après l'étape c) une étape supplémentaire d) qui consiste à séparer le milieu réactionnel en deux phases : une phase aqueuse et une phase organique comprenant la résine silicone **(A)** et ledit liquide **(F).**

7. Procédé de préparation d'une résine silicone **(A)** selon la revendication 6 **caractérisé en ce que** l'on effectue après l'étape d) une étape supplémentaire e) qui consiste à isoler ladite phase organique et à éliminer ledit liquide **(F)** (étape de « stripping ») afin d'isoler ladite résine **(A).**

8. Procédé de préparation d'une résine silicone **(A)** selon la revendication 7 **caractérisé en ce que** ladite résine **(A)** est filtrée.

9. Procédé de préparation d'une résine silicone **(A)** selon la revendication 6 **caractérisé en ce que** l'on effectue après l'étape d) une étape supplémentaire e') dans laquelle on réduit le taux des groupements silanols résiduels de la résine silicone **(A)** tout en éliminant ledit liquide **(F)** afin d'isoler ladite résine **(A).**

10. Procédé de préparation d'une résine silicone **(A)** selon la revendication 9 **caractérisé en ce que** l'on réduit le taux des groupements silanols résiduels de la résine silicone **(A)** par condensation des groupements silanols résiduels en présence d'un catalyseur alcalin ou en faisant réagir les groupements silanols résiduels en présence de silazane(s) ou de dérivé(s) silanes halogéné(s).

## Patentansprüche

1. Verfahren zur Herstellung eines Silikonharzes **(A)**, umfassend:
- einen Schritt a), der aus der vorzugsweise kontinuierlichen Polymerisation eines Natriumsilikats **(B)** in wässrigem Medium und in Gegenwart einer Säure **(C)** zur Bildung eines Siliciumdioxid-Hydrosols (Polykieselsäure) besteht,
wobei das Verfahren **dadurch gekennzeichnet ist, dass** man:
- mindestens ein Fluid **(1)**, das das Natriumsilikat **(B)** in wässriger Phase umfasst, und mindestens ein Fluid **(2),** das die Säure **(C)** umfasst, mit Hilfe mindestens eines Intensivmischwerkzeugs **(M),** das eine Leistungsdichte ε von mehr als 10 kW/m³, vorzugsweise mehr als 20 kW/m³ und noch weiter bevorzugt 20 kW/m³ < ε < 10⁶ kW/m³ abgibt, kontinuierlich dynamisch mischt, wobei sich die Ströme an einem einzigen Punkt treffen, was eine Mischung **(3)** ergibt,
- am Ausgang des Intensivmischwerkzeugs die Mischung **(3)** gewinnt und
- die Polymerisationsreaktion mit der Mischung **(3)** in einem Reaktor **(R1)** zur Bildung eines Siliciumdioxid-Hydrosols (Polykieselsäure) fortsetzt, und
- einen Schritt b) der darin besteht, die Polymerisationsreaktion durch vorzugsweise kontinuierliche Zugabe eines Alkohols **(D)** zu verlangsamen (Quenchschritt).

2. Verfahren zur Herstellung eines Silikonharzes **(A)** nach Anspruch 1, **dadurch gekennzeichnet, dass** es mit einer Verweilzeit **t1** der Fluide **(1)** und **(2)** in dem Intensivmischwerkzeug **(M)** kleiner oder gleich 0,1 s und vorzugsweise 0,0001 s ≤ **t1** ≤ 0,1 s durchgeführt wird.

3. Verfahren zur Herstellung eines Silikonharzes **(A)** nach Anspruch 1, **dadurch gekennzeichnet, dass** die Verweilzeit **t2** der Polymerisationsreaktion der Mischung **(3)** kleiner oder gleich 120 min, vorzugsweise **t2** ≤ 60 min und noch weiter bevorzugt 1 s ≤ **t2** ≤ 10 min ist.

4. Verfahren zur Herstellung eines Silikonharzes **(A)** nach Anspruch 1, **dadurch gekennzeichnet, dass** man nach Schritt b) einen zusätzlichen Schritt c) der Funktionalisierung ("Capping") durchführt, der aus der vorzugsweise kontinuierlichen Zugabe einer Organosiliciumverbindung **(E)** und mindestens einer Flüssigkeit **(F),** die aus der Gruppe bestehend aus organischen Lösungsmitteln, Siloxan-Fluiden und Mischungen davon ausgewählt wird, besteht.

5. Verfahren zur Herstellung eines Silikonharzes **(A)** nach Anspruch 4, **dadurch gekennzeichnet, dass** die Flüssigkeit **(F)** aus der Gruppe bestehend aus Hexamethyldisiloxan, Toluol, Xylol, einer linearen Kohlenwasserstoffverbindung und einer verzweigten Kohlenwasserstoffverbindung ausgewählt wird.

6. Verfahren zur Herstellung eines Silikonharzes **(A)** nach einem der Ansprüche 4 und 5, **dadurch gekennzeichnet, dass** man nach Schritt c) einen zusätzlichen Schritt d) durchführt, der aus der Trennung des Reaktionsmediums in zwei Phasen, nämlich eine wässrige Phase und eine organische Phase, die das Silikonharz **(A)** und die Flüssigkeit **(F)** umfasst, besteht.

7. Verfahren zur Herstellung eines Silikonharzes **(A)** nach Anspruch 6, **dadurch gekennzeichnet, dass** man nach Schritt d) einen zusätzlichen Schritt e) durchführt, der aus der Isolierung der organischen Phase und der Entfernung der Flüssigkeit **(F)** besteht (Strippschritt) besteht, um das Harz **(A)** zu isolieren.

8. Verfahren zur Herstellung eines Silikonharzes **(A)** nach Anspruch 7, **dadurch gekennzeichnet, dass** das Harz **(A)** filtriert wird.

9. Verfahren zur Herstellung eines Silikonharzes **(A)** nach Anspruch 6, **dadurch gekennzeichnet, dass** man nach Schritt d) einen zusätzlichen Schritt e') durchführt, in dem man den Gehalt an restlichen Silanolgruppen des Silikonharzes **(A)** unter gleichzeitiger Entfernung der Flüssigkeit **(F)** verringert, um das Harz **(A)** zu isolieren.

10. Verfahren zur Herstellung eines Silikonharzes **(A)** nach Anspruch 9, **dadurch gekennzeichnet, dass** man den Gehalt an restlichen Silanolgruppen des Silikonharzes **(A)** durch Kondensation der restlichen Silanolgruppen in Gegenwart eines alkalischen Katalysators oder durch Umsetzung der restlichen Silanolgruppen in Gegenwart von Silazan bzw. Silazanen oder halogeniertem Silanderivat bzw. halogenierten Silanderivaten verringert.

## Claims

1. A process for preparing a silicone resin **(A)** comprising:
- a step a) which consists of the polymerization, preferably continuous, of a sodium silicate **(B)** in an aqueous medium and in the presence of an acid **(C)** to form a silica hydrosol (polysilicic acid),
said process being **characterized in that**:
- at least one fluid **(1)** comprising the sodium silicate **(B)** in an aqueous phase and at least one fluid **(2)** comprising the acid **(C)** are mixed by continuous dynamic mixing, the streams meeting each other at a single point to form a mixture **(3)** using at least one intensive mixing tool **(M)** dissipating a power density ε greater than 10 kW/m³, preferably greater than 20 kW/m³ and more preferably still 20 kW/m³ < ε < 10⁶ kW/m³;
- the mixture **(3)** is recovered at the outlet of the intensive mixing tool; and
- the polymerization reaction is continued with the mixture **(3)** within a reactor **(R1)** to form the silica hydrosol (polysilicic acid); and
- a step b) which consists in slowing down (quenching step) the polymerization reaction by addition, preferably continuous, of an alcohol **(D)** .

2. Process for preparing a silicone resin **(A)** according to Claim 1, **characterized in that** it is carried out with a mixing residence time **t1** of the fluids **(1)** and **(2)** in the intensive mixing tool **(M)** of less than or equal to 0.1 s and preferably 0.0001 s ≤ **t1** ≤ 0.1 s.

3. Process for preparing a silicone resin **(A)** according to Claim 1, **characterized in that** the residence time **t2** of the polymerization reaction of the mixture **(3)** is less than or equal to 120 min, preferably **t2** ≤ 60 min and more preferably still 1 s ≤ **t2** ≤ 10 min.

4. Process for preparing a silicone resin **(A)** according to Claim 1, **characterized in that** after the step b) a supplementary functionalization (capping) step c) is carried out that consists of the addition, preferably continuous, of an organosilica compound **(E)** and of at least one liquid **(F)** chosen from the group composed of: organic solvents, siloxane fluids and mixtures thereof.

5. Process for preparing a silicone resin **(A)** according to Claim 4, **characterized in that** the liquid **(F)** is chosen from the group composed of: hexamethyldisiloxane, toluene, xylene, a linear hydrocarbon-based compound and a branched hydrocarbon-based compound.

6. Process for preparing a silicone resin **(A)** according to either one of Claims 4 and 5, **characterized in that** after the step c) a supplementary step d) is carried out which consists in separating the reaction medium into two phases: an aqueous phase and an organic phase comprising the silicone resin **(A)** and said liquid **(F).**

7. Process for preparing a silicone resin **(A)** according to Claim 6, **characterized in that** after the step d) a supplementary step e) is carried out which consists in isolating said organic phase and in removing said liquid **(F)** (stripping step) in order to isolate said resin **(A).**

8. Process for preparing a silicone resin **(A)** according to Claim 7, **characterized in that** said resin **(A)** is filtered.

9. Process for preparing a silicone resin **(A)** according to Claim 6, **characterized in that** after the step d) a supplementary step e') is carried out in which the amount of residual silanol groups of the silicone resin **(A)** is reduced while removing said liquid **(F)** in order to isolate said resin **(A).**

10. Process for preparing a silicone resin **(A)** according to Claim 9, **characterized in that** the amount of residual silanol groups of the silicone resin **(A)** is reduced by condensation of the residual silanol groups in the presence of an alkali metal catalyst or by making the residual silanol groups react in the presence of silazane(s) or of halogenated silane derivative(s) .
